# FASCICULE DE BREVET EUROPEEN

(11) **EP 3 962 801 B1**
(45) Date de publication et mention de la délivrance du brevet: **12.07.2023**
(21) Numéro de dépôt: 19722550.1
(22) Date de dépôt: 29.04.2019
(51) Int. Cl.: B62J 25/00

(54) **REPOSE-PIED A POINT D'APPUI REGLABLE**
FUSSSTÜTZE MIT VERSTELLBAREM LAGERPUNKT
FOOTREST WITH ADJUSTABLE BEARING POINT

(43) Date de publication de la demande: 09.03.2022
(73) Titulaire: Western Horses Events Sprl, 6740 Étalle (BE)
(72) Inventeur: THIRY, John, 6730 Tintigny (BE)
(74) Mandataire: AWA Benelux
(86) Numéro de dépôt international: PCT/EP2019/060950
(87) Numéro de publication internationale: WO 2020/221425

(56) Documents cités:
- BE-A6- 1 009 220
- DE-U1-202018 101 690
- US-A1- 2009 108 560
- US-A1- 2012 286 494

## Description

### Objet de l'invention

La présente invention se rapporte à un repose-pied, en particulier pour moto, dont la conception permet au pilote d'augmenter sa puissance de serrage en étau sur le cadre de la moto.

### Etat de la technique

Un des principaux soucis d'un pilote de moto est de maintenir son équilibre sur le véhicule. Ce dernier doit déplacer son poids d'un côté à l'autre de la moto en fonction de la trajectoire et des bosses qu'il rencontre pour répartir son poids et garder l'équilibre. Un élément important pour réaliser ce transfert de poids est le repose-pied.

Le repose-pied est un appui fixé de chaque côté du châssis de la moto et sur lequel les pieds du pilote viennent s'appuyer pour effectuer le transfert de poids afin de maintenir son équilibre. L'emplacement et l'orientation du repose-pied sont importants pour la sensation du pilote. La pression en étau exercée par les pieds et les jambes du pilote sur le cadre de la moto permet de contrôler celle-ci afin d'éviter qu'elle ne se dérobe en glissant dans les virages. De cette manière, la moto reste en ligne droite même sur un terrain accidenté, ce qui est particulièrement important dans le cadre des courses de motocross par exemple.

La puissance en étau exercée par les pieds et jambes du pilote est à ce jour uniquement déterminée par la puissance musculaire du pilote. Les performances des motos ayant augmenté considérablement au cours des dernières années, la plupart des pilotes n'ont plus une puissance musculaire suffisante pour le contrôle de la moto, ce qui génère un manque de contrôle et de nombreuses chutes.

Le document US 6,339,972 décrit une pédale pour motocross réglable offrant une meilleure adhérence. La pédale est pivotante et le mouvement de pivotement vers le haut est limité par une butée en saillie tandis que le mouvement de pivotement vers le bas est limité par une vis de butée. La pédale comprend une pluralité de crampons agrippant le dessous de la chaussure du pilote pour améliorer l'adhérence de la semelle sur la pédale. Ces crampons sont réglables en hauteur, indépendamment les uns des autres. De cette manière, l'inclinaison de la surface de la pédale, qui sera engagée par la chaussure du pilote, peut être ajustée en réglant la hauteur des différents crampons. En utilisation, les crampons sont situés sous la chaussure du pilote et servent à agripper la semelle de celle-ci en vue d'améliorer l'adhérence de la chaussure sur la pédale.

Le document BE1009220 décrit un repose-pied pour moto prolongé à l'avant par une tige verticale servant de point d'appui au pied du pilote. Cette tige verticale permet au pilote d'augmenter sa puissance de serrage en étau sur son véhicule.

Le document DE202018101690 divulgue un repose-pied pour moto, réglable en hauteur, permettant à plusieurs personnes de tailles différentes d'utiliser une moto équipée de ce repose-pied en effectuant un simple réglage. L'empreinte du repose-pied est pourvue de goupilles saillantes sur le dessus, qui peuvent être en métal ou en plastique, venant sous la chaussure pour une meilleure adhérence

### Buts de l'invention

La présente invention vise à fournir un repose-pied, en particulier pour moto, ne comportant pas les inconvénients de l'état de la technique. Elle vise en particulier à offrir un repose-pied limitant la perte d'équilibre et offrant un meilleur contrôle de la moto, grâce à l'augmentation de la puissance de serrage en étau du pilote autour du cadre de cette dernière.

La présente invention a également pour avantage de proposer un repose-pied aisément réglable en fonction de l'utilisateur.

### Résumé de l'invention

La présente invention divulgue un repose-pied pour moto comportant :
- une surface d'appui destinée à être, en utilisation, en contact avec la plante du pied du conducteur via la semelle de sa chaussure;
- une pluralité d'embases réparties sur ladite surface d'appui;
- une cale d'appui étant fixée de manière amovible sur l'une desdites embases, ladite cale d'appui fonctionnant en utilisation comme une butée pour le pied de l'utilisateur, la cale d'appui ayant une hauteur comprise entre 1,5 et 4 cm et le rapport entre la hauteur de la cale d'appui et la hauteur des embases filetées étant compris entre 2 et 5.

Les modes particuliers de réalisation de l'invention comportent au moins une ou une combinaison appropriée des caractéristiques suivantes :
- la cale d'appui est taraudée et l'embase est filetée, ou vice-versa, ce qui permet la fixation amovible de la cale d'appui sur l'embase par vissage ;
- la cale d'appui a une hauteur comprise entre 2 et 3 cm ;
- le rapport entre la hauteur de la cale d'appui et la hauteur des embases filetées est compris entre entre 3 et 4 ;
- les embases sont au moins au nombre de trois, préférablement en nombre supérieur à cinq ;
- la cale d'appui est faite d'un coeur en acier recouverte d'un manchon en caoutchouc.

### Brève description des figures

La figure 1 représente une vue tridimensionnelle d'un exemple du repose-pied selon l'invention.

La figure 2 représente une vue de profil d'un repose-pied selon l'invention.

La figure 3 représente une vue de haut d'un repose-pied selon l'invention.

### Références numériques des figures

- 1.: Repose-pied
- 2.: Surface d'appui au contact de la semelle/plante du pied de l'utilisateur
- 3.: Cale d'appui
- 4.: Embase filetée

### Description détaillée de l'invention

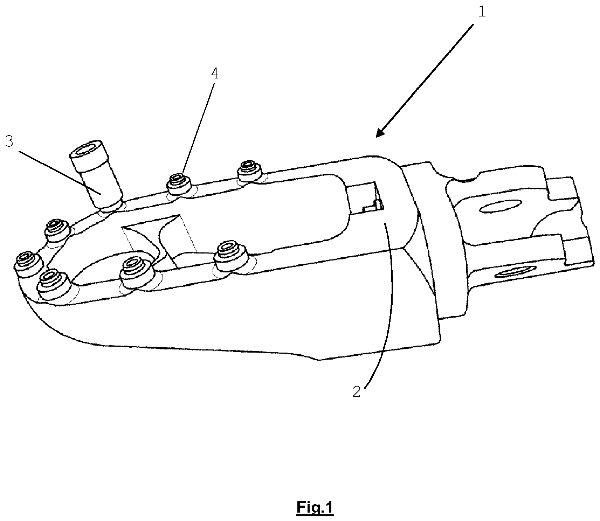

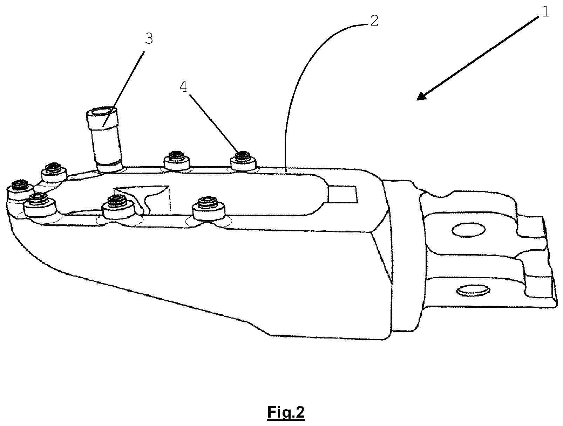

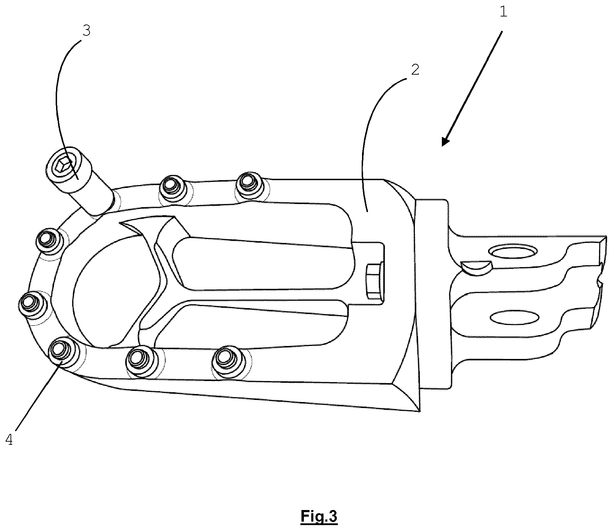

Un exemple de repose-pied 1 selon l'invention est illustré à la Figure 1. Celui-ci comprend une surface d'appui 2 sur laquelle vient se poser le pied de l'utilisateur lorsqu'il pilote la moto. La surface d'appui est, en utilisation, en contact avec le dessous de la semelle de la chaussure de l'utilisateur. Des embases 4 sont réparties sur cette surface d'appui 2, permettant de venir y fixer une cale d'appui 3, tel que représenté sur les figures 1 à 3. Préférablement, la fixation de la cale d'appui 3 se fait par vissage, l'embase 4 étant filetée et la cale d'appui 3 étant taraudée, ou vice-versa.

La cale d'appui 3 fonctionne comme une butée pour le pied de l'utilisateur. La chaussure vient en effet en butée contre cette cale d'appui 3, et l'utilisateur peut s'appuyer contre celle-ci avec l'avant du pied tandis que l'arrière du pied exerce une pression sur le cadre de la moto. Cette cale d'appui 3 permet avantageusement d'augmenter jusqu'à 40 pourcents la puissance de serrage en étau sur le cadre de la moto.

La cale d'appui 3 est fixée sur une des embases 4, choisie en fonction de sa localisation sur le repose-pied. D'après la taille du pied du pilote et d'après son positionnement habituel, la cale d'appui sera positionnée de la manière la plus optimale, sur l'embase filetée adéquate. De cette manière, quand la moto doit être utilisée par un autre pilote qui a des pieds de largeur différente, il suffit de déplacer la cale d'appui d'une embase filetée à une autre, par dévissage/revissage par exemple.

Les autres embases 4, sur lesquelles n'est pas fixée la cale d'appui 3, sont donc libres et, en utilisation, seront situées sous la chaussure du pilote, en contact avec la semelle. Ces embases libres sont alors utilisées comme des crampons améliorant l'adhérence de la chaussure sur la surface d'appui 2 du repose-pied 1, évitant ainsi le glissement de la chaussure sur la surface d'appui 2. Contrairement aux embases libres, l'embase comprenant la cale d'appui n'est pas située, en utilisation, sous le pied au contact de la semelle, mais bien en contact, par l'intermédiaire de la cale d'appui 3, avec le bord avant du pied (ou chaussure), permettant à l'utilisateur de s'y appuyer pour émettre une pression sur la cale, ce qui accroît sa force appliquée par le bord arrière de son pied sur le cadre de la moto (augmentant ainsi la puissance de serrage en étau).

Les embases 4 sont au minimum au nombre de trois sur la surface totale d'appui 2 du repose-pied, et préférablement en nombre supérieur à cinq, et de manière particulièrement préférée, supérieur à huit. Au plus la surface d'appui 2 comprend d'embases 4, au plus le positionnement de la cale d'appui 2 est réglable de manière fine.

La cale d'appui 3 a une hauteur comprise entre 1,5 et 4 cm, préférablement entre 2 et 3 cm, et de manière particulièrement préférée d'environ 2 cm. Le rapport entre la hauteur de la cale d'appui 3 et celle des embases filetées libres 4 utilisées en tant que crampons d'adhérence est compris entre 2 et 5, préférablement entre 3 et 4. L'effet des embases 4 libres utilisées en tant que crampons n'est pas le même que celui de l'embase 4 comprenant la cale d'appui 3, de par leur différence de hauteur, comme expliqué précédemment.

Préférentiellement, la cale d'appui 3 est faite d'un coeur en acier recouverte d'un manchon en caoutchouc permettant de limiter le frottement de la chaussure sur la cale 3, et donc d'en limiter l'usure, et de fournir une sensation plus agréable au pilote.

Dans un autre mode de réalisation, la fixation de la cale d'appui 3 sur l'embase 4 peut se faire par d'autres moyens de fixation amovibles que par vissage, par exemple, par emboîtement ou clippage de la cale 3 sur l'embase 4.

Un avantage de cette invention est de permettre une meilleure emprise sur le cadre de la moto, tout en fournissant un repose-pied réglable. En effet, à l'heure actuelle, les repose-pieds sont universels et peuvent difficilement être adaptés au conducteur. Grâce à l'utilisation d'une cale d'appui amovible, celle-ci peut être déplacée à l'endroit adéquat en fonction du pilote de la moto, fournissant en même temps un équilibre amélioré.

## Revendications

1. Repose-pied (1) pour moto comportant :
- une surface d'appui (2) destinée à être, en utilisation, en contact avec la plante du pied du conducteur via la semelle de sa chaussure;
- une pluralité d'embases (4) réparties sur ladite surface d'appui (2) ;
- une cale d'appui (3) étant fixée de manière amovible sur l'une desdites embases (4), ladite cale d'appui (3) fonctionnant en utilisation comme une butée pour le pied de l'utilisateur,
**caractérisé en ce que** la cale d'appui (3) a une hauteur comprise entre 1,5 et 4 cm et **en ce que** le rapport entre la hauteur de la cale d'appui (3) et la hauteur des embases filetées (4) est compris entre 2 et 5.

2. Repose-pied selon la revendication 1, **caractérisé en ce que** la cale d'appui (3) est taraudée et **en ce que** l'embase (4) est filetée, ce qui permet la fixation amovible de la cale d'appui (3) sur l'embase (4) par vissage.

3. Repose-pied selon la revendication 1, **caractérisé en ce que** la cale d'appui (3) est filetée et **en ce que** l'embase (4) est taraudée, ce qui permet la fixation amovible de la cale d'appui (3) sur l'embase (4) par vissage.

4. Repose-pied selon l'une quelconque des revendications précédentes, **caractérisé en ce que** la cale d'appui (3) a une hauteur comprise entre 2 et 3 cm.

5. Repose-pied selon l'une quelconque des revendications précédentes, **caractérisé en ce que** le rapport entre la hauteur de la cale d'appui (3) et la hauteur des embases filetées (4) est compris entre 3 et 4.

6. Repose-pied selon l'une quelconque des revendications précédentes, **caractérisé en ce que** les embases (4) sont au moins au nombre de trois.

7. Repose-pied selon l'une quelconque des revendications précédentes, **caractérisé en ce que** les embases (4) sont en nombre supérieur à cinq.

8. Repose-pied selon l'une quelconque des revendications précédentes, **caractérisé en ce que** la cale d'appui (3) est faite d'un coeur en acier recouverte d'un manchon en caoutchouc.

## Patentansprüche

1. Fußstütze (1) für ein Motorrad, die Folgendes umfasst:
- eine Stützoberfläche (2), die darauf ausgelegt ist, im Gebrauch mit der Fußsohle des Fahrers durch die Sohle seines Schuhs im Kontakt zu sein;
- eine Vielzahl von Sockeln (4), die auf der Stützoberfläche (2) verteilt sind;
- ein Stützelement (3), das lösbar an einem der Sockel (4) befestigt ist, wobei das Stützelement (3) im Gebrauch als Anschlag für den Fuß des Benutzers dient,
**dadurch gekennzeichnet, dass** das Stützelement (3) eine Höhe hat, die zwischen 1,5 und 4 cm liegt und dass das Verhältnis zwischen der Höhe des Stützelements (3) und der Höhe der mit einem Außengewinde versehenen Sockel (4) zwischen 2 und 5 liegt.

2. Fußstütze nach Anspruch 1, **dadurch gekennzeichnet, dass** das Stützelement (3) mit einem Innengewinde versehen ist und dass der Sockel (4) mit einem Außengewinde versehen ist, wodurch die lösbare Befestigung des Stützelements (3) am Sockel (4) durch Schrauben ermöglicht wird.

3. Fußstütze nach Anspruch 1, **dadurch gekennzeichnet, dass** das Stützelement (3) mit einem Außengewinde versehen ist und dass der Sockel (4) mit einem Innengewinde versehen ist, wodurch die lösbare Befestigung des Stützelements (3) am Sockel (4) durch Schrauben ermöglicht wird.

4. Fußstütze nach einem der vorangehenden Ansprüche, **dadurch gekennzeichnet, dass** das Stützelement (3) eine Höhe hat, die zwischen 2 und 3 cm liegt.

5. Fußstütze nach einem der vorangehenden Ansprüche, **dadurch gekennzeichnet, dass** das Verhältnis zwischen der Höhe des Stützelements (3) und der Höhe der mit einem Außengewinde versehenen Sockel (4) zwischen 3 und 4 liegt.

6. Fußstütze nach einem der vorangehenden Ansprüche, **dadurch gekennzeichnet, dass** mindestens drei Sockel (4) vorhanden sind.

7. Fußstütze nach einem der vorangehenden Ansprüche, **dadurch gekennzeichnet, dass** über fünf Sockel (4) vorhanden sind.

8. Fußstütze nach einem der vorangehenden Ansprüche, **dadurch gekennzeichnet, dass** das Stützelement (3) aus einem Kern aus Stahl gemacht ist, der mit einer Gummimanschette überzogen ist.

## Claims

1. A footrest (1) for a motorcycle comprising:
- a bearing surface (2) intended to be, in use, in contact with the sole of the driver's foot via the sole of their shoe;
- a plurality of bases (4) distributed over said bearing surface (2);
- a bearing element (3) being removably fixed on one of said bases (4), said bearing element (3) serving, in use, as a stop for the user's foot,
**characterized in that** the bearing element (3) has a height of between 1.5 and 4 cm and **in that** the ratio between the height of the bearing element (3) and the height of the threaded bases (4) is between 2 and 5.

2. The footrest according to claim 1, **characterized in that** the bearing element (3) is tapped and **in that** the base (4) is threaded, which allows the bearing element (3) to be removably fixed on the base (4) by screwing.

3. The footrest according to claim 1, **characterized in that** the bearing element (3) is threaded and **in that** the base (4) is tapped, which allows the bearing element (3) to be removably fixed on the base (4) by screwing.

4. The footrest according to any one of the preceding claims, **characterized in that** the bearing element (3) has a height of between 2 and 3 cm.

5. The footrest according to any one of the preceding claims, **characterized in that** the ratio between the height of the bearing element (3) and the height of the threaded bases (4) is between 3 and 4.

6. The footrest according to any one of the preceding claims, **characterized in that** there are at least three bases (4).

7. The footrest according to any one of the preceding claims, **characterized in that** there are more than five bases (4).

8. The footrest according to any one of the preceding claims, **characterized in that** the bearing element (3) is made of a steel core covered by a rubber sleeve.
